# EUROPEAN PATENT SPECIFICATION

(11) **EP 0 310 678 B1**
(45) Date of publication and mention of the grant of the patent: **02.08.1995**
(21) Application number: 88903369.2
(22) Date of filing: 12.04.1988
(51) Int. Cl.: G11B 27/10, G11B 23/36

(54) **DISC RECORDING/REPRODUCING APPARATUS AND DISC RECORDING/REPRODUCING METHOD**
PLATTENAUFZEICHNUNGS-/WIEDERGABEGERÄT UND PLATTENAUFZEICHNUNGS-/WIEDERGABEMETHODE
DISPOSITIF ET PROCEDE D'ENREGISTREMENT/REPRODUCTION DE DISQUES

(30) Priority: 15.04.1987 JP 57319/87 U
(43) Date of publication of application: 12.04.1989
(73) Proprietor: SONY CORPORATION, Tokyo 141 (JP)
(72) Inventor: ANDO, Ryo Sony Corporation, Tokyo 141 (JP)
(74) Representative: Pilch, Adam John Michael
(86) International application number: PCT/JP88/00365
(87) International publication number: WO 88/08197

(56) References cited:
- EP-A- 0 164 131
- EP-A- 0 169 597
- EP-A- 0 281 415
- JP-A- 5 661 075
- JP-A- 6 050 757
- JP-A-61 145 786
- JP-U- 5 860 389
- NL-A- 7 901 801
- PATENT ABSTRACTS OF JAPAN vol. 7, no. 2 (P-166)(1147) 07 January 1983 & JP-A-57-162152
- BRITISH KINEMATOGRAPHY SOUND AND TELEVISION SOCIETY JOURNAL. vol. 65, no. 7, July 1983, LONDON GB pages 384 - 388; MARGADANT: "Interfacing A-V Equipment to Compact Disc"
- PATENT ABSTRACTS OF JAPAN vol. 12, no. 319 (P-751)(3166) 30 August 1988 & JP-A-63-083984
- Nikkei Electronics No. 365 25 March (25. 03. 85) (Tokyo) FUSHIKI KAORU "Shuhen Tanmatsu Ya Compact Disk, Gazo File Ni Tsukawareyotoshiteiru Shokyo Kano Na Optical disk" p. 167-188
- Utility Model Application No. 39163/1983 (Utility Model Laid-Open No. 145786/1984) no Gansho ni Tenpushita Specification and Drawing no Naiyo o Satsueishita Microfilm (28. 9. 1984, published by Japanese Patent Office) (Family: none)

## Description

This invention relates to disc recording and/or reproduction.

There is known an optical disc on which audio signals such as speech or musical sounds are recorded in digitised form, this being termed a compact disc (CD). A player for reproducing CDs is usually provided with a programme reproducing function which reproduces selected ones of the programmes such as tunes recorded on the disc in a desired sequence. There is also known, for example from European Patent Application No. EP-A-0 169 597, a disc player in which the programme information for each of a plurality of discs is stored in a memory from which the memory contents are not erased even when the power source is turned off (non-volatile memory) and in which the disc is automatically discriminated and the corresponding programme information selected in dependence upon the table of contents (TOC) information indicating the recorded contents to effect programme reproduction.

In a CD, the TOC information is recorded in the lead-in region which is an inner area of the recording region or programme area reserved for recording the play information.

While the CD is limited to reproduction, there is a demand for a disc system in which the disc is recordable but which can maintain compatibility with respect to the CD format. As an example, a system has been proposed which makes use of a magneto-optical disc, it being possible for disc recording/reproducing apparatus of such a system to provide the aforementioned stored programme reproducing function. Such a system is disclosed in European Patent Application No. EP-A-0 164 131. However, there is a limit to the memory capacity in the recording/reproducing apparatus and thus to the number of programmes that can be stored. In addition, when reproduction is to be performed in different apparatus, the same programme selection cannot be reproduced unless the operation of preparing the programme selection is performed again in that apparatus.

European Patent Application No. EP-A-0 024 858 discloses a video recording disc in which the order of reproduction of data is stored on the disc in the form of a digital programme instruction sequence signal. Playback apparatus initially recovers the instruction sequence signal and then controls the playback operating mode accordingly.

According to one aspect of the invention there is provided recording apparatus for a recordable disc having a recording region in which data such as performance information is recorded and a lead-in region which includes recordable information concerning separate programmes of the recorded data, the apparatus comprising:
memory means for storing programme information relating to programmes constituted by the recorded data in the recording region of the disc; and
means for recording programme information in the lead-in region of the disc;
characterised by:
the memory means comprising a first memory for storing programme information reproduced from the lead-in region of the disc, and a second memory for storing selected programme information;
operator-controllable information select means for allowing selection of the recordable information in the recording region concerning a plurality of the separate programmes and storing the selected programme information in the second memory;
display means for displaying data relating to the selected programme information; and
control means for controlling the recording means to record the selected programme information stored in the second memory in the lead-in region of the disc.

According to another aspect of the invention there is provided reproducing apparatus for a recordable disc having a recording region in which data such as performance information is recorded and a lead-in region which includes recorded table of contents information concerning separate programmes of the recorded data and selected programme information, the apparatus comprising:
means for reproducing the table of contents information and the selected programme information from the lead-in region of the disc;
a first memory for storing the table of contents information and a second memory for storing the selected programme information; and
operator-controllable control means for selectively providing a programme reproduction start command which causes the selected programme information to be read out from the second memory instead of the table of contents information from the first memory, and thereby controls the reproducing means to reproduce the recording region of the disc in accordance with the selected programme information.

According to a further aspect of the invention there is provided a reproducing method for a recordable disc having a recording region in which data such as performance information is recorded and a lead-in region which includes recorded table of contents information concerning separate programmes of the recorded data and selected programme information, the method comprising:
reproducing the table of contents information and the selected programme information from the lead-in region of the disc;
storing the table of contents information and the selected programme information respectively in first and second memories;
detecting a programme reproduction start command selectively provided by an operator-controllable control means;
reading out the selected programme information from the second memory in response to the detected programme reproduction start command instead of the table of contents information from the first memory; and
reproducing the recording region of the disc in accordance with the selected programme information.

A preferred embodiment of the invention provides a disc recording/reproducing apparatus and method whereby programme reproduction may be easily performed from a large number of discs without employing a memory of large capacity. The same programme selection can be reproduced on different apparatus without the necessity of newly performing a programme selection forming operation in that apparatus.

The technique according to the preferred embodiment is that a plurality of programmes such as pieces of music (tunes) recorded in the recording region of the optically recordable disc provided for recording the play information and the like are selected by the operation of a tune select key and stored as selected programme information in programme storage means; the programme information is then recorded in a lead-in region of the disc provided in proximity to the recording region reserved for the play information and the like; at the time of reproduction, the programme information recorded in the lead-in region of the disc is transferred to the programme storage means and programme reproduction is performed in accordance with the programme information.

The programme information is recorded in the lead-in region of the disc and programme reproduction is performed on the basis of the programme information, so that programme reproduction can be easily effected from a large number of discs without employing a memory of large capacity. When reproduction is performed using different apparatus, the same programme selection can be reproduced without newly performing the programme selection forming operation.

The invention will now be described by way of example with reference to the accompanying drawings, throughout which like parts are referred to by like references, and in which:
Figure 1 is a block diagram of a disc recording/reproducing apparatus according to an embodiment of the invention;
Figure 2 is a diagrammatic view showing a disc for use in the apparatus of Figure 1;
Figure 3 is a diagrammatic view showing the structure of one frame of data recorded on the disc;
Figure 4 is a flow chart illustrating the operation of storing the programme information in the disc recording/reproducing apparatus of Figure 1; and
Figure 5 is a flow chart illustrating the operation of loading the programme information.

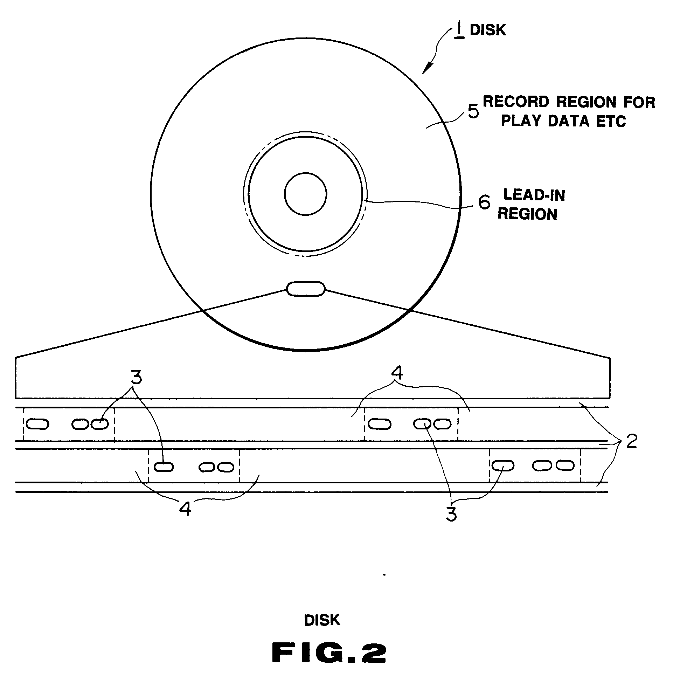

Referring firstly to Figure 2, an optically recordable disc 1 may, for example, be a photo-magnetic disc which is 12 cm across and which has a vertically magnetisable film exhibiting magneto-optical effects. On the disc 1, there is spirally formed a pregroove 2 acting as a guide groove. On a land between adjacent pregrooves 2, a prerecorded region 3 in which patterns of projections and recesses are previously recorded along the circumferential direction and a signal recording region 4 in which magneto-optical recording is performed, are formed alternately, each at an equal pitch.

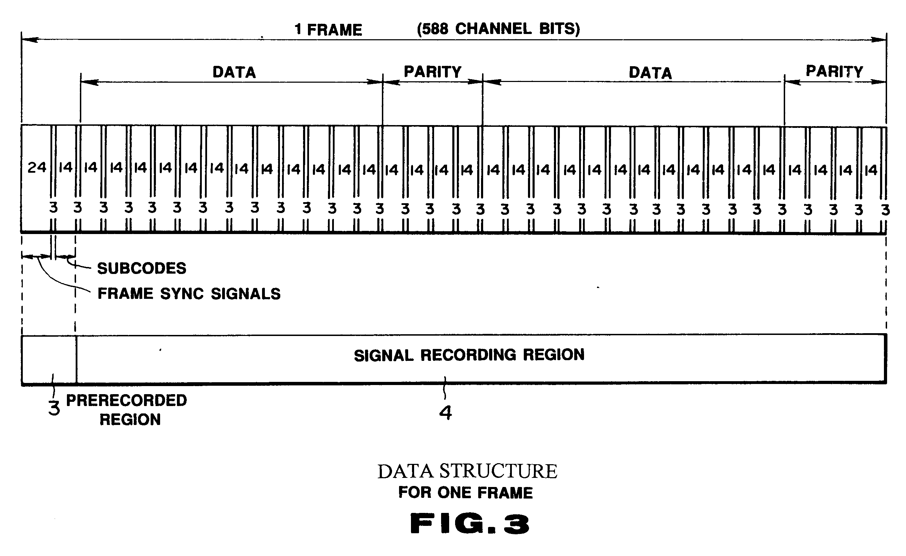

Figure 3 shows the data structure for one frame, as specified by the compact disc (CD) format. Thus, one frame is composed of 588 channel bits, and is formed by data that have passed through eight to fourteen modulation (EFM). More specifically, each such frame is made up of 24-bit frame sync signals, 14-bit or 1-symbol subcodes, data such as 14 x 32-bit or 32-symbol play information, and parity bits. A number of merging bits, each composed of three bits, are provided for connecting the symbols, so that each frame is composed of a sum total of 588 bits.

Among the data making up the aforementioned one frame, the frame sync signals and the subcodes are previously recorded in the prerecorded region 3 by moulding as patterns of alternate projections and recesses, while data such as play information and parities may be recorded by magneto-optical recording in the signal recording region 4.

It will be noted that only the subcodes written into the Q-channel, that is, the absolute address information or absolute time information from the starting end to the terminal end of the record region 5 of the disc 1 for the play information, are previously recorded in the pre-recorded region 3.

In the lead-in region 6 of the disc 1, formed adjacent to and on the inner peripheral side of the record region 5 of the disc 1 for the play information and the like, the TOC information is recorded, including the programme or tune number, the start address (start time), the end address (end time) and the programme information for programme reproduction. It is to be noted that the programme information is recorded, for example, in succession to the TOC information.

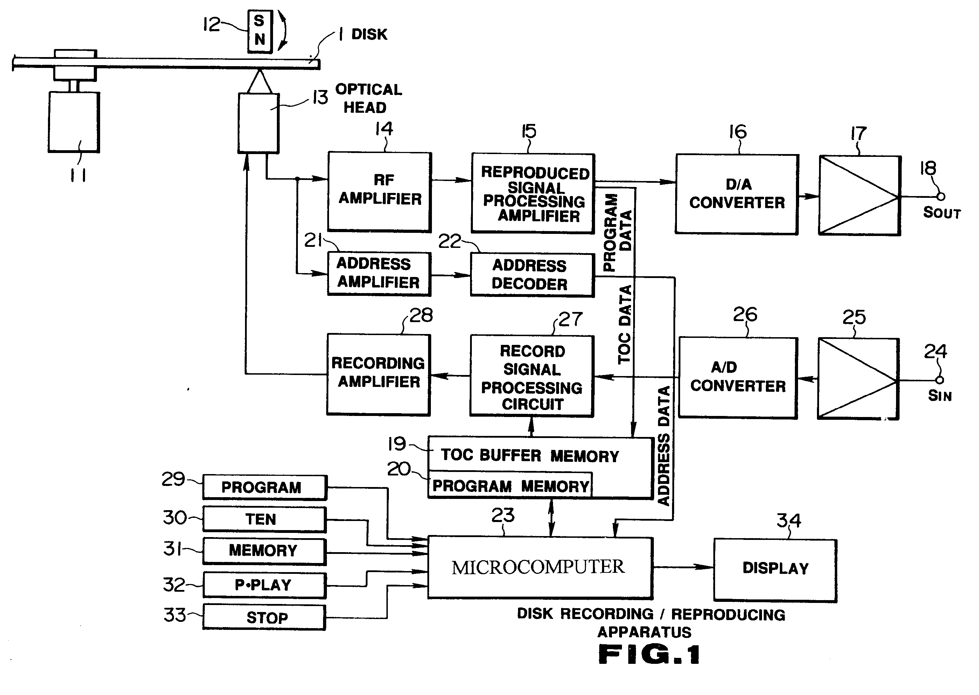

The disc recording/reproducing apparatus of the present embodiment will now be described by referring to Figure 1.

The disc 1 is driven into rotation at a constant linear velocity (CLV) by a spindle motor 11. A magnet 12 and an optical head 13 are disposed facing each other on opposite sides of the disc 1. The magnet 12 affords a magnetic field for recording or erasing the information on or from the disc 1 by taking advantage of magneto-optical effects, with the direction of the magnetic poles being inverted for recording and erasure. The optical head 13 is composed of a number of optical components, such as a laser diode, a photo-detector, a lens or beam splitter, and is arranged to record or reproduce the information upon irradiating the disc by a laser beam.

Among the RF signals read out from the disc 1 by the optical head 13, the reproduced signals from the signal recording region 4 are supplied to a reproduced signal processing circuit 15 via an RF amplifier 14 for performing a prescribed signal processing operation. The information reproduced from the record region 5 for the play information of the disc 1 is transmitted from the reproduced signal processing circuit 15 to a digital/analog (D/A) converter 16 in which it is converted into the corresponding analog information in the form of reproduced audio signals S_{OUT} provided at an output terminal 18 via a buffer amplifier 17. The TOC information reproduced from the lead-in region 6 of the disc 1 is transmitted from the reproduced signal processing circuit 15 to a TOC buffer memory 19 for storage in the TOC buffer memory 19. The programme information reproduced from the lead-in region 6 is transmitted from the reproduced signal processing circuit 15 to a programme memory 20 so as to be stored in the programme memory 20. The programme memory 20 forms part of the TOC buffer memory 19.

The reproduced signals from the pre-recorded region 3 of the disc 1 are transmitted via an address amplifier 21 to an address decoder 22 and the absolute address information decoded in the address decoder 22 is supplied to a microcomputer 23.

The audio signals S_{IN} to be recorded on the disc 1 are supplied from an input termiral 24 via a buffer amplifier 25 to an analog/digital (A/D) converter 26 and converted into digitised form. The output from the A/D converter 26, that is, the digitised play information, is processed in a predetermined manner in a recording signal processing circuit 27 and thence transmitted via a recording amplifier 28 to the optical head 13 so as to be recorded in the record region 5 on the disc 1 for the play information and the like.

The recording signal processing circuit 27 is connected to the aforementioned TOC buffer memory 19 and the programme memory 20 such that the TOC information of the programme information is recorded in the lead-in region 6 on the disc 1 as the occasion may demand. The TOC buffer memory 19 and the programme memory 20 are connected to the microcomputer 23 for exchange of information. To the microcomputer 23, there are connected operating keys including a programme key 29, a ten-key 30, a memory key 31, a programme reproducing (P play) key 32 and a stop key 33, as well as a display 34 for displaying the tune or track number, and the like.

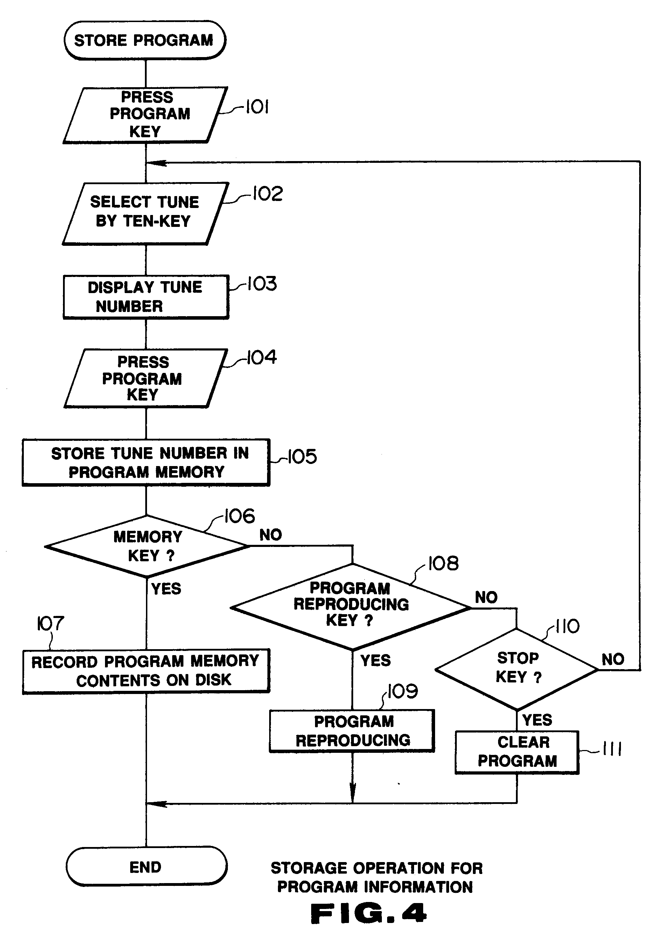

The operation of storing the programme information in the disc recording/reproducing apparatus of Figure 1 will now be explained by referring to the flow chart of Figure 4.

The programme key 29 is first pressed to establish a programme mode at a step 101. The ten-key 30, which is a tune select key, is then used at a step 102 to select a tune that is desired to be reproduced first in the programme reproduction. At this time, the number of the selected tune or track number is displayed on the display 34 at a step 103. The programme key 29 is then pressed at a step 104 to store the tune number displayed on the display in the programme memory 20 at a step 105. Then it is decided at a step 106 whether or not the memory key 31 has been pressed. If it is found that the key has been pressed, the contents of the programme memory 20, that is, the programme information, is recorded at a step 107 in the lead-in region 6 of the disc 1. If it is found at the step 106 that the memory key 31 has not been pressed, it is decided at a step 108 whether or not the programme reproducing key 32 has been pressed. If it is found at the step 108 that the programme reproducing key 32 has been pressed, programme reproduction is performed at a step 109 in accordance with the contents of the programme memory or programme information. If it is found at the step 108 that the programme reproducing key 32 has not been pressed, it is decided at a step 110 whether or not the stop key 33 has been pressed. If it is found at this step 110 that the stop key 33 has been pressed, the contents of the programme memory 20, that is, the programme information, is cleared at a step 111. If it is found at the step 110 that the stop key 33 has not been pressed, the steps 102 et seq. are executed again.

That is, upon repeated execution of the steps 102 through to 105, a number of tunes can be selected sequentially thereby forming a programme sequence. When the memory key 31 is pressed at the time that a programme sequence has been completed, the programme information is read out from the programme memory 20 so as to be recorded in the lead-in region 6 of the disc 1. When the programme reproducing key 32 is pressed before pressing the memory key 31, programme reproduction may be performed without the programme information being written into the lead-in region 6 of the disc 1. Also, when the stop key 33 is pressed before pressing the memory key 31, the contents of the programme memory 20 may be cleared.

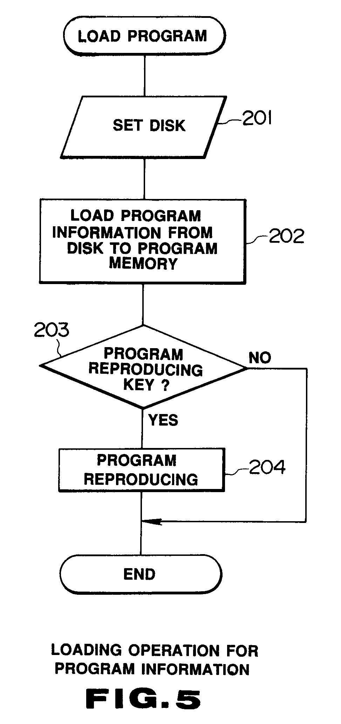

The operation of loading the programme information will now be explained by referring to the flow chart of Figure 5. When the disc 1 is placed in position within the apparatus at a step 201, the programme information recorded in the lead-in region 6 on the disc 1 is read out and transferred or loaded at a step 102 into the programme memory 20. It is then decided at a step 203 whether or not the programme reproducing key 32 has been pressed. If it is found that the key 32 has been pressed, programme reproduction is performed at a step 204 in accordance with the programme information transferred to the programme memory 20.

It will be appreciated from the above that, in the disc recording/reproducing apparatus of the present embodiment, the programme information for programme reproduction can be recorded in the lead-in region 6 of the disc 1, such that a programme memory having a storage capacity for the programme information for one disc will suffice as the programme memory 20 provided in the apparatus. In other words, programme reproduction from a large number of discs may be easily performed without the need to provide a memory of larger capacity. In addition, the same programme sequence may be reproduced on other apparatus without the need to newly perform a programme formulating operation.

## Claims

1. Recording apparatus for a recordable disc (1) having a recording region (5) in which data such as performance information is recorded and a lead-in region (6) which includes recordable information concerning separate programmes of the recorded data, the apparatus comprising:
memory means (19,20) for storing programme information relating to programmes constituted by the recorded data in the recording region (5) of the disc (1); and
means (27) for recording programme information in the lead-in region (6) of the disc (1);
characterised by:
the memory means (19,20) comprising a first memory (19) for storing programme information reproduced from the lead-in region (6) of the disc (1), and a second memory (20) for storing selected programme information;
operator-controllable information select means (29-33) for allowing selection of the recordable information in the recording region (5) concerning a plurality of the separate programmes and storing the selected programme information in the second memory (20);
display means (34) for displaying data relating to the selected programme information; and
control means (23) for controlling the recording means (27) to record the selected programme information stored in the second memory (20) in the lead-in region (6) of the disc (1).

2. Reproducing apparatus for a recordable disc (1) having a recording region (5) in which data such as performance information is recorded and a lead-in region (6) which includes recorded table of contents information concerning separate programmes of the recorded data and selected programme information, the apparatus comprising:
means (15) for reproducing the table of contents information and the selected programme information from the lead-in region (6) of the disc (1);
a first memory (19) for storing the table of contents information and a second memory (20) for storing the selected programme information; and
operator-controllable control means (23) for selectively providing a programme reproduction start command which causes the selected programme information to be read out from the second memory (20) instead of the table of contents information from the first memory (19), and thereby controls the reproducing means (15) to reproduce the recording region (5) of the disc (1) in accordance with the selected programme information.

3. A reproducing method for a recordable disc (1) having a recording region (5) in which data such as performance information is recorded and a lead-in region (6) which includes recorded table of contents information concerning separate programmes of the recorded data and selected programme information, the method comprising:
reproducing the table of contents information and the selected programme information from the lead-in region (6) of the disc (1);
storing the table of contents information and the selected programme information respectively in first and second memories (19,20);
detecting a programme reproduction start command selectively provided by an operator-controllable control means (23);
reading out the selected programme information from the second memory (20) in response to the detected programme reproduction start command instead of the table of contents information from the first memory (19); and
reproducing the recording region (5) of the disc (1) in accordance with the selected programme information.

## Patentansprüche

1. Aufzeichnungsvorrichtung für eine beschreibbare Platte (1), die einen Aufzeichnungsbereich (5) hat, in welchem Daten, beispielsweise eine Durchführungsinformation, aufgezeichnet sind, und einen Einlaufbereich (6), der eine beschreibbare Information enthält, die separate Programme der aufgezeichneten Daten betrifft, wobei die Vorrichtung aufweist:
eine Speichereinrichtung (19, 20) zum Speichern einer Programminformation, die sich auf Programme bezieht, die durch die aufgezeichneten Daten im Aufzeichnungsbereich (5) der Platte (1) gebildet sind; und
eine Einrichtung (27) zum Aufzeichnen einer Programminformation im Einlaufbereich (6) der Platte (1);
gekennzeichnet durch:
die Speichereinrichtung (19, 20), die einen ersten Speicher (19) hat, um eine Programminformation zu speichern, die aus dem Einlaufbereich (6) der Platte (1) reproduziert wurde, und einen zweiten Speicher (20), um die ausgewählte Programminformation zu speichern;
eine durch eine Bedienungsperson steuerbare Informationsauswahleinrichtung (29 - 33), um eine Auswahl der beschreibbaren Information im Aufzeichnungsbereich (5) zuzulassen, die eine Vielzahl von separaten Programmen betrifft, und um die ausgewählte Programminformation im zweiten Speicher (20) zu speichern;
eine Anzeigeeinrichtung (34) zur Anzeige von Daten, die die ausgewählte Programminformation betreffen; und
eine Steuereinrichtung (23) zum Steuern der Aufzeichnungseinrichtung (27), um die ausgewählte Programminformation, die im zweiten Speicher (20) gespeichert ist, im Einlaufbereich (6) der Platte (1) aufzuzeichnen.

2. Wiedergabevorrichtung für eine beschreibbare Platte (1), die einen Aufzeichnungsbereich (5) hat, in welchem Daten, beispielsweise eine Durchführungsinformation, aufgezeichnet sind, und einen Einlaufbereich (6), der ein Informations-Inhaltsverzeichnis aufweist, das separate Programme der aufgezeichneten Daten und eine ausgewählte Programminformation betrifft, wobei die Vorrichtung aufweist:
eine Einrichtung (15) zur Wiedergabe des Informations-Inhaltsverzeichnisses und der ausgewählten Programminformation aus dem Einlaufbereich (6) der Platte (1);
einen ersten Speicher (19) zum Speichern des Informations-Inhaltverzeichnisses, und einen zweiten Speicher (20) zum Speichern der ausgewählten Programminformation; und
eine durch eine Bedienungsperson steuerbare Steuereinrichtung (23), um wahlweise einen Programmwiedergabe-Startbefehl zu liefern, damit die ausgewählte Programminformation aus dem zweiten Speicher (20) anstelle des Informations-Inhaltsverzeichnisse vom ersten Speicher (19) gelesen wird, und dadurch die Wiedergabeeinrichtung (15) steuert, um den Aufzeichnungsbereich (5) der Platte (1) gemäß der ausgewählten Programminformation wiederzugeben.

3. Wiedergabeverfahren für eine bespielbare Platte (1), die einen Aufzeichnungsbereich (5) hat, in dem Daten, beispielsweise eine Durchführungsinformation, aufgezeichnet sind, und einen Einlaufbereich (6), der ein aufgezeichnetes Informations-Inhaltsverzeichnis aufweist, das separate Programme der aufgezeichneten Daten und der ausgewählten Programminformation betrifft, wobei das Verfahren aufweist:
Wiedergabe des Informations-Inhaltsverzeichnisses und der ausgewählten Programminformation aus dem Einlaufbereich (6) der Platte (1);
Speichern des Informations-Inhaltsverzeichnisses und der ausgewählten Programminformation in einem ersten bzw. einem zweiten Speicher (19 ,20);
Ermitteln eines Programmwiedergabe-Startbefehls, der wahlweise durch eine durch eine Bedienungsperson steuerbare Steuereinrichtung (23) bereitgestellt wird;
Lesen der ausgewählten Programminformationen aus dem zweiten Speicher (20) in Abhängigkeit vom ermittelten Programmwiedergabe-Startbefehl anstelle des Informations- Inhaltsverzeichnisses aus dem ersten Speicher (19); und
Wiedergabe des Aufzeichnungsbereichs (5) der Platte (1) gemäß der ausgewählten Programminformation.

## Revendications

1. Appareil d'enregistrement pour disque enregistrable (1) comportant une région (5) d'enregistrement dans laquelle une donnée telle qu'une information d'exécution est enregistrée et une région (6) initiale qui comprend des informations enregistrables concernant des programmes distincts de données enregistrées, l'appareil comprenant:
un moyen de mémoires (19, 20) destiné à mémoriser une information programme concernant les programmes constitué par les données enregistrées dans la région (5) d'enregistrement du disque (1); et
un moyen (27) destiné à enregistrer l'information programme dans la région (6) initiale du disque (1);
caractérisé par:
le moyen (19, 20) de mémoires comprenant une première mémoire (19) destinée à mémoriser l'information programme reproduite de la région (6) initiale du disque (1), et une seconde mémoire (20) destinée à mémoriser l'information programme choisi;
un moyen (29 à 33) de sélection de l'information qui peut être commandé par un opérateur permettant la sélection de l'information enregistrable dans la région (5) d'enregistrement concernant une pluralité de programmes distincts et mémorisant l'information programme choisi dans la seconde mémoire (20);
un moyen (34) d'affichage pour afficher la donnée relative à l'information programme choisi; et
un moyen (23) de commande pour commander le moyen (27) d'enregistrement pour enregistrer l'information programme choisi mémorisée dans la seconde mémoire (20) dans la région (6) initiale du disque (1).

2. Appareil de reproduction d'un disque enregistrable (1) comportant une région (5) d'enregistrement dans laquelle une donnée telle qu'une information exécution est enregistrée et une région (6) initiale qui comprend une information enregistrée table des matières concernant des programmes distincts de données enregistrées et une information programme choisi, l'appareil comprenant:
un moyen (15) destiné à reproduire l'information table des matières et l'information programme choisi de la région (6) initiale du disque (1);
une première mémoire (19) destinée à mémoriser l'information table des matières et une seconde mémoire (20) destinée à mémoriser l'information programme choisi; et
un moyen (23) de commande qui peut être commandé par un opérateur destiné à fournir sélectivement une commande de démarrage de reproduction de programme qui déclenche la lecture de l'information programme choisi dans la seconde mémoire (20) au lieu de l'information table des matières dans la première mémoire (19), et commande ainsi le moyen (15) de reproduction pour reproduire la région (5) d'enregistrement du disque (1) en fonction de l'information programme choisi.

3. Procédé de reproduction d'un disque enregistrable (1) comportant une région (5) d'enregistrement dans laquelle une donnée telle qu'une information exécution est enregistrée et une région (6) initiale qui comprend une information enregistrée table des matières concernant des programmes distincts de données enregistrées et une information programme choisi, le procédé comprenant:
la reproduction de l'information table des matières et l'information programme choisi de la région (6) initiale du disque (1);
la mémorisation de l'information table des matières et l'information programme choisi respectivement dans les première et seconde mémoires (19, 20);
la détection d'une commande de démarrage de reproduction de programme délivrée sélectivement par un moyen (23) de commande qui peut être commandé par un opérateur;
la lecture de l'information programme choisi dans la seconde mémoire (20) en réponse à la commande de démarrage de reproduction de programme au lieu de l'information table des matières dans la première mémoire (19); et
la reproduction de la région (5) d'enregistrement du disque (1) en fonction de l'information programme choisi.
